# EUROPEAN PATENT SPECIFICATION

(11) **EP 1 584 259 B1**
(45) Date of publication and mention of the grant of the patent: **25.02.2009**
(21) Application number: 05007325.3
(22) Date of filing: 04.04.2005
(51) Int. Cl.: A45D 31/00, B29C 51/10

(54) **Method for manufacturing artificial nails**
Verfahren zur Herstellung von künstlichen Fingernägeln
Procédé de fabrication d'ongles artificiels

(30) Priority: 06.04.2004 KR 2004023469
(43) Date of publication of application: 12.10.2005
(73) Proprietor: Big Plus CRE., Inc., Seoul 137-874 (KR); Lee, Jun-Hee, Seoul 138-220 (KR)
(72) Inventor: Lee, Jun-Hee, Seoul, 138-220 (KR)
(74) Representative: Beier, Ralph

(56) References cited:
- GB-A- 1 125 910
- JP-A- 2002 172 018
- US-A- 6 102 686
- US-A1- 2003 226 639

## Description

### BACKGROUND OF THE INVENTION

### 1. Field of the Invention

The present invention relates to a method for manufacturing an artificial nail, and more particularly, to a method for manufacturing an artificial nail by means of vacuum molding.

### 2. Description of the Background Art

Most women apply make-up for beauty and also manicure their nails. However, the operation of manicuring one's nail is very cumbersome and there is inconvenience in that it takes a great deal of time until the manicure is hardened. To solve such cumbersomeness and inconvenience, there has been developed an artificial nail. An artificial nail is fixedly bonded to the surface of a nail using double-sided tape, instant adhesive, or the like. Such an artificial nail has a variety of patterns and colors and can be replaced with another artificial nail at any time according to the user's taste, thereby reducing time required for a nail beauty operation.

Generally, such an artificial nail is manufactured by means of injection molding. Although an artificial nail can be manufactured from a variety of resin materials, acrylonitrile butadiene styrene (ABS) resin is used as the material of the artificial nail if the artificial nail is manufactured by means of injection molding. ABS resin has been widely used as molded products made of ABS resin can be easily separated from an injection-molded stem after they have been injection-molded and there is no burr that produces a rough edge generated through cutting.

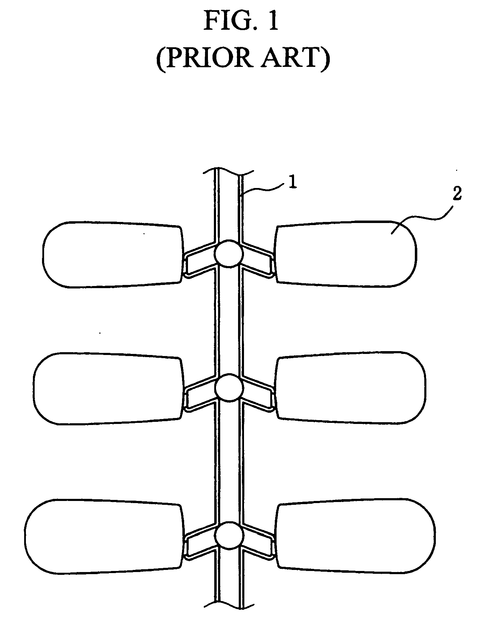

Fig. 1 is a perspective view showing a molded body of artificial nails, which is injection-molded according to a prior art. An injection molding method for manufacturing an artificial nail will be briefly described with reference to Fig. 1. ABS resin is input into an injection-molding machine with a pair of embossed and depressed injection molds to manufacture artificial nails. The artificial nails 2 molded through injection molding are attached to an injection-molded stem 1. The artificial nails 2 are then separated from the injection-molded stem 1 and decorated with predetermined colors or patterns by means of various methods such as curved surface printing or spray printing.

The artificial nail manufactured by means of the conventional method is attached to a user's nail using an instant adhesive or double-sided tape. If the artificial nail is attached using an instant adhesive, the artificial nail made of ABS resin is attached to the surface of the user's natural nail while the entire attachment surface of the artificial nail is fully dissolved by the instant adhesive. If the user's natural nail is grown after a lapse of a predetermined period of time, for example, about one week, the artificial nail should be removed. Upon removal of the artificial nail, the user's natural nail with the artificial nail attached thereto is dipped into chemicals such as acetone for a certain period of time and the artificial nail is then removed. Since the artificial nail made of ABS resin is securely attached to the entire surface of the user's natural nail as described above, it generally takes about 10 minutes or more to remove the artificial nail made of ABS resin.

Since the artificial nail is manufactured through injection molding in the conventional method for manufacturing the artificial nail, a limitation exists on the number of cavities in the injection molds, and thus, there is a problem in that the yield of artificial nails which can be produced at one time is lowered. When the surface of an artificial nail is decorated after the artificial nail has been molded, a printing method applicable thereto is limited to the spray printing or the curved surface printing. Therefore, there is a disadvantage in that delicate patterns cannot be printed. Further, since the artificial nail is manufactured by means of injection molding, there is a problem in that the artificial nail cannot be manufactured from materials other than ABS resin.

Meanwhile, since the artificial nail made of ABS resin is attached to the entire surface of a user's natural nail while the attachment surface of the artificial nail is fully dissolved by the instant adhesive, the artificial nail is removed in such a manner that the user's natural nail with the artificial nail attached thereto should be dipped into chemicals such as acetone for a long time and the surface of the natural nail should be scraped with a manicure stick to completely remove foreign substances. Thus, there is a disadvantage in that it takes a great deal of time to remove the artificial nail. Moreover, since the user's finger should be dipped into acetone for a long time, there is a disadvantage in that the user's skin may become damaged.

JP 2002-172018 A discloses a method and apparatus for manufacturing artificial nails from flat sheets onto which a pattern is printed prior to forming of the nails. The artificial nails are formed by pressing the flat sheet between two corresponding molds.

A method for forming artificial nails by vacuum molding from flat sheets is known from GB 1125910. According to this method, a flat sheet without a printed pattern is sucked into a porous vacuum mold to which a vacuum is applied from the backside.

### SUMMARY OF THE INVENTION

Accordingly, the present invention is conceived to solve the aforementioned problems in the prior art. An object of the present invention is to provide a method for manufacturing an artificial nail, wherein the artificial nail can be rapidly mass-produced without increase in production costs.

Another object of the present invention is to provide a method for manufacturing an artificial nail, wherein the surface of the artificial nail can be decorated variously and delicately.

A further object of the present invention is to provide a method for manufacturing an artificial nail from a variety of materials in addition to ABS resin.

A still further object of the present invention is to provide a method for manufacturing an artificial nail that is not harmful to the user's skin and can be quickly and conveniently removed upon removal of the artificial nail from a user's natural nail.

According to the present invention for achieving these objects, there is provided a method for manufacturing an artificial nail, comprising a forming step of forming a flat sheet; a printing step of printing patterns on the flat sheet; a heating step of heating the flat sheet with the patterns printed thereon; a sucking step of sucking the heated flat sheet so that the flat sheet is brought into contact with a vacuum mold that is embossed in the form of a plurality of artificial nails wherein air is sucked through vacuum pipes installed at the portion of the upper surface of the vacuum mold outwith the location which is embossed in the form of a plurality of artificial nails; a cooling step of cooling the sucked flat sheet; and a cutting step of cutting the cooled flat sheet into individual artificial nails.
In the method for manufacturing the artificial nail, the cutting step is preferably performed by means of press cutting. The flat sheet is preferably formed of PET resin.

### BRIEF DESCRIPTION OF THE DRAWINGS

The above and other objects, features and advantages of the present invention will become apparent from the following description of a preferred embodiment in conjunction with the accompanying drawings, in which:
Fig. 1 is a view showing the structure of a molded body that is injection-molded by means of a conventional method for manufacturing an artificial nail;
Fig. 2 is a flowchart illustrating a method for manufacturing an artificial nail according to the present invention;
Fig. 3 is a perspective view showing a flat sheet with patterns printed in a printing step of the method for manufacturing an artificial nail according to the present invention;
Fig. 4 is a view showing processes in a sucking step of the method for manufacturing an artificial nail according to the present invention;
Fig. 5 is a perspective view showing the flat sheet molded through the sucking step of the method for manufacturing an artificial nail according to the present invention;
Fig. 6 is a view showing processes in a cutting step of the method for manufacturing an artificial nail according to the present invention; and
Fig. 7 is a perspective view showing a state where an artificial nail manufactured by the method for manufacturing the artificial nail according to the present invention is used.

### DETAILED DESCRIPTION OF THE INVENTION

Hereinafter, a preferred embodiment of a method for manufacturing an artificial nail according to the present invention will be described with reference to the accompanying drawings.

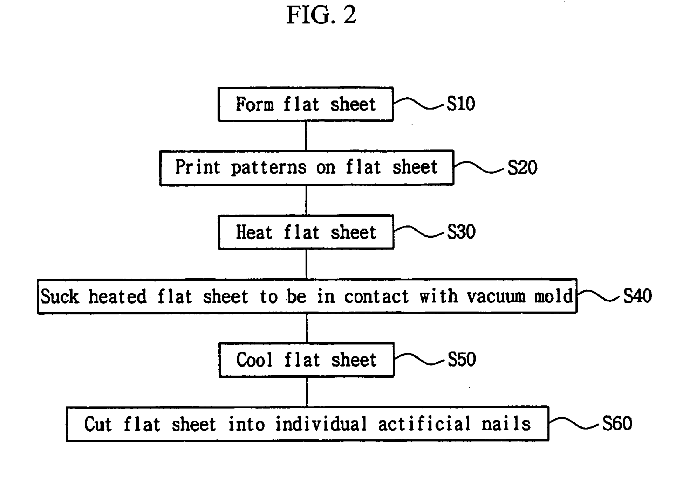

Fig. 2 is a flowchart illustrating the method for manufacturing an artificial nail according to the present invention. Referring to Fig. 2, an artificial nail is manufactured by sequentially performing the steps of forming a flat sheet (S10), performing printing on the flat sheet (S20), heating the flat sheet (S30), sucking the heated planar-sheet (S40), cooling the sheet molded by the suction (S50), and cutting the molded sheet (S60).

The flat sheet in the present invention can be molded out of the same ABS resin as has been used in the prior art. According to the present invention, the flat sheet can also be extruded using polyethylene terephthalate (PET) resin that has not been used as a material of the artificial nail in a conventional method since it is difficult to separate a molded body made of PET resin from an injection-molded stem as described above.

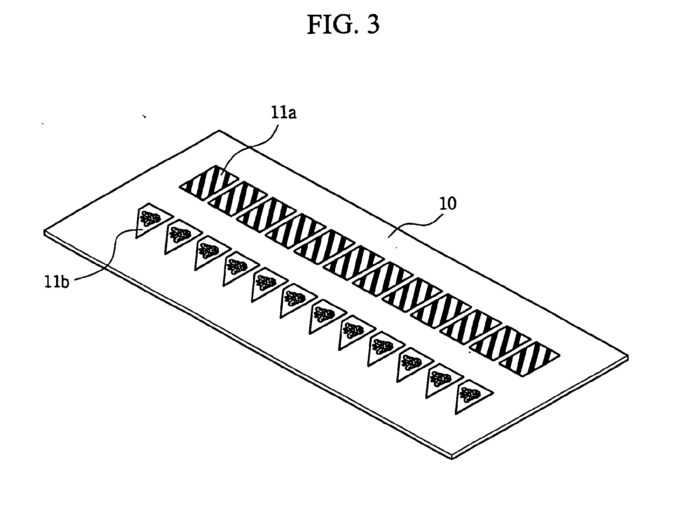

Fig. 3 is a perspective view showing the flat sheet with patterns printed in the printing step of the method for manufacturing an artificial nail according to the present invention. Referring to the figure, a plurality of patterns 11a and 11b are printed on the flat sheet 10 at predetermined intervals in the printing step (S20). Since the printing is performed directly on the plane of the flat sheet 10, a variety printing methods such as offset printing, screen printing, gravure printing and pad printing can be employed, contrary to the prior art in which a pattern is printed on the surface of a curved artificial nail molded through injection molding. Therefore, time required for the printing step is greatly reduced and a variety of printing methods can be employed. Accordingly, the present invention enables various and delicate patterns to be printed on the artificial nail.

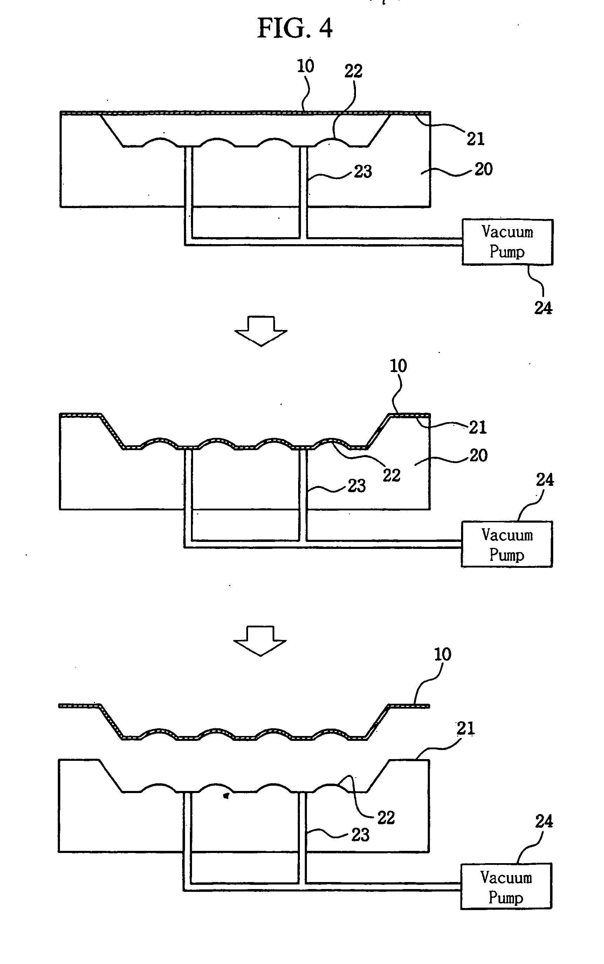

In the heating step (S30), the flat sheet 10 has fluidity due to heating. The flat sheet 10 with the patterns 11 printed thereon is placed on a vacuum mold (20 in Fig. 4) and then heated by a heater (not shown) installed above the flat sheet 10. Although the present invention has been described in connection with the embodiment in which the flat sheet 10 is placed on the vacuum mold 20 and heated from above, the flat sheet 10 may be placed on and heated by a heating plate.

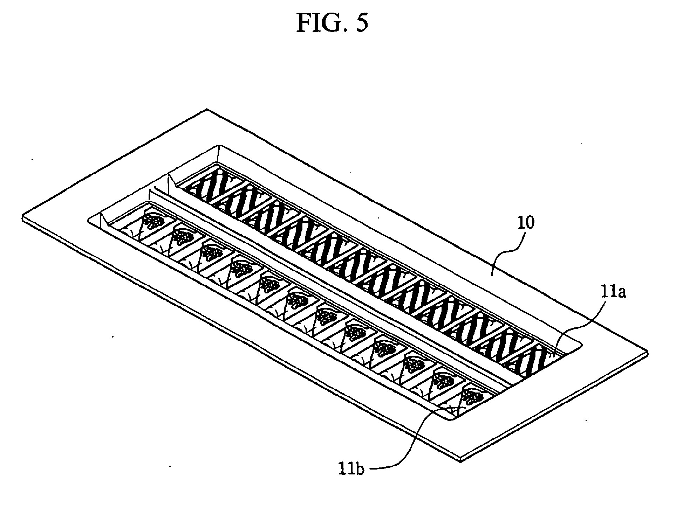

Fig. 4 is a view showing processes in the sucking step of the method for manufacturing an artificial nail according to the present invention, and Fig. 5 is a perspective view showing the flat sheet molded through the sucking step. Referring to Figs. 4 and 5, in the sucking step (S40), the flat sheet 10 that has been heated to a predetermined temperature is sucked in the vacuum mold 20 that is embossed in the form of a plurality of artificial nails, thereby molding artificial nails. The vacuum mold 20 comprises an installation stand 21 on which the flat sheet 10 is installed, artificial nail-shaped protrusions 22 embossed on an upper surface of the vacuum mold, vacuum pipes 23 installed within the vacuum mold 20, and a vacuum pump 24 connected to the vacuum pipes. The flat sheet 10 is installed on the installation stand 21 at a predetermined distance from the protrusions 22. The vacuum pipes 23 communicate with the upper surface of the vacuum mold 20, and the vacuum pump 24 sucks air, which exists between the flat sheet 10 and the upper surface of the vacuum mold 20, through the vacuum pipes 23. As the air is sucked, the flat sheet 10 is brought into contact with the upper surface of the vacuum mold 20 due to vacuum generated by the vacuum pump. The flat sheet 10 that has been heated to have fluidity in the heating step (S30) is brought into contact with the artificial nail-shaped protrusions 22 formed on the vacuum mold 20 due to vacuum. Accordingly, the flat sheet is molded to have a plurality of artificial nails therein. Contrary to conventional injection molding, such vacuum molding enables artificial nails to be more rapidly mass-produced at one time since a desired number of artificial nail-shaped protrusions 22 can be formed on the vacuum mold 20.

The sucked flat sheet 10 is then cooled in the cooling step (S50). In the cooling step (S50), the flat sheet 10 is cooled by circulating cooling water through general cooling water passages formed in the vacuum mold 20 in the state where the heated flat sheet 10 is sucked and brought into contact with the upper surface of the vacuum mold 20.

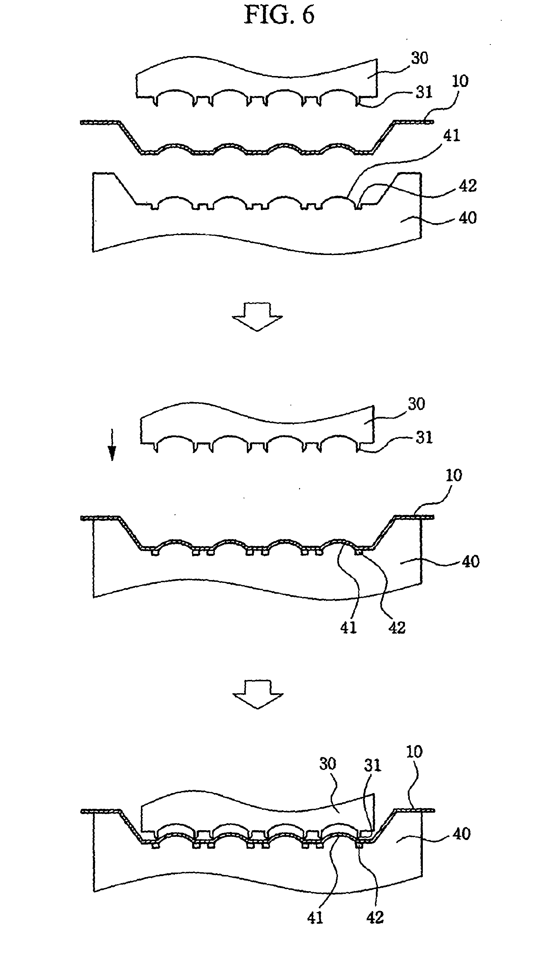

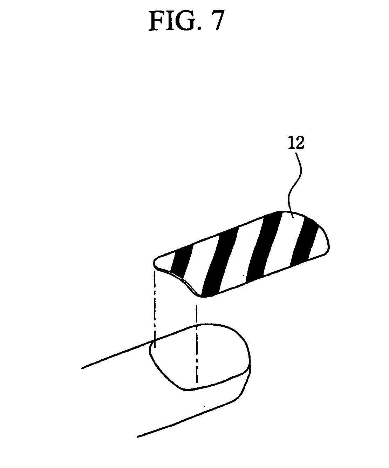

Fig. 6 is a view showing processes in the cutting step of the method for manufacturing an artificial nail according to the present invention. Referring to Fig. 6, the flat sheet 10 with the plurality of artificial nails formed therein as shown in Fig. 5 is cut into individual artificial nails (12 in Fig. 7) in the cutting step (S60). In this embodiment, the flat sheet 10 is cut by mans of a press cutting machine. The press cutting machine comprises a pair of upper and lower dies 30 and 40. The upper die 30 has cutting edges 31 for cutting the flat sheet 10 into the individual artificial nails, and the lower die 40 has supports 41 taking the shape of a plurality of artificial nails corresponding to the shape of the flat sheet 10. Recesses 42 for avoiding interference with the cutting edges 31 are formed on both sides of each of the supports 41. To cut the flat sheet 10, the molded flat sheet 10 is first placed on the lower die 40 to conform to the respective supports 41. Then, the upper die 30 is lowered and the flat sheet 10 is cut into individual artificial nails 12 by the cutting edges 31. Since the flat sheet 10 is cut by means of press cutting, there is no burr, which is a rough edge generated due to cutting, on the artificial nails 12 after the cutting operation, and a single cutting operation enables a plurality of artificial nails 12 to be manufactured at one time. Thus, artificial nails can be mass-produced in a short period of time. Although the press cutting machine is used in the cutting step (S60) in this embodiment, it will be apparent that other cutting means may be used.

Next, the operation of the artificial nail manufactured by the method for manufacturing the artificial nail according to the present invention will be described.

Fig. 7 is a perspective view showing a state where the artificial nail manufactured by the method for manufacturing the artificial nail according to the present invention is used. With the method for manufacturing the artificial nail according to the present invention, the artificial nail 12 can be easily molded out of PET resin. In the case where the artificial nail 12 is made of PET resin, the degree of dissolution of the attachment surface of the artificial nail 12 by an adhesive is remarkably lower than that of an artificial nail made of ABS resin. As such, when the artificial nail 12 is removed after a lapse of a certain period of time, the time required for removal of the artificial nail is greatly reduced compared with the removal of a conventional artificial nail molded out of ABS resin. Since the artificial nail 12 can be removed even though the user's natural nail with the artificial nail 12 attached thereto is dipped into chemicals such as acetone for a very short period of time, time required for removal of the artificial nail 12 is shortened. Further, since it is necessary to dip the finger into the chemicals such as acetone only for a short period of time, there is little damage to the user's skin.

As described above, the method for manufacturing the artificial nail according to the present invention has an advantage in that the artificial nail can be rapidly mass-produced without an increase in production costs.

Further, since patterns are printed on the flat sheet prior to the suction step, there is an advantage in that various and delicate patterns or designs can be printed on the surface of the artificial nail, thereby manufacturing a beautiful artificial nail.

In particular, the artificial nail can be manufactured from a variety of materials including PET resin. Since the artificial nail can be removed without dipping a user's hand into chemicals such as acetone for a long time, there is no damage to the user's skin. Moreover, there is an advantage in that the artificial nail can be conveniently and rapidly removed in a short period of time.

## Claims

1. A method for manufacturing an artificial nail, comprising:
a forming step of forming a flat sheet;
a printing step of printing patterns on the flat sheet;
a heating step of heating the flat sheet with the patterns printed thereon;
a sucking step of sucking the heated flat sheet so that the flat sheet is brought into contact with a vacuum mold that is embossed in the form of a plurality of artificial nails whereby air is sucked through vacuum pipes installed at the portion of the upper surface of the vacuum mold outwith the location which is embossed in the form of a plurality of artificial nails;
a cooling step of cooling the sucked flat sheet; and
a cutting step of cutting the cooled flat sheet into individual artificial nails.

2. The method according to claim 1, wherein the cutting step is performed by means of press cutting.

3. The method according to claim 1, wherein the flat sheet is formed of PET resin.

## Patentansprüche

1. Verfahren zum Herstellen eines künstlichen Nagels mit:
einem Formungsschritt der Formung eines flachen Blattes;
einem Druckschritt des Druckens von Mustern auf das flache Blatt;
einem Erhitzungsschritt des Erhitzens des flachen Blattes mit den aufgedruckten Mustern;
einem Saugschritt des Ansaugens des erhitzten flachen Blattes, so dass das flache Blatt in Kontakt mit einer Vakuumform gebracht wird, die in der Form mehrerer künstlicher Nägel geprägt ist, wobei Luft durch Vakuumrohre gesaugt wird, die an dem Teil der oberen Oberfläche der Vakuumform außerhalb der in der Form mehrerer künstlicher Nägel geprägten Stelle angeordnet sind;
einem Kühlschritt des Abkühlens des angesaugten flachen Blattes; und
einem Schneideschritt des Zerschneidens des abgekühlten flachen Blattes in einzelne künstliche Nägel.

2. Verfahren nach Anspruch 1, bei dem der Schneideschritt mittels Pressschneidens durchgeführt wird.

3. Verfahren nach Anspruch 1, bei dem das flache Blatt aus PET-Kunststoff geformt wird.

## Revendications

1. Procédé de fabriquer un ongle artificiel, comprenant:
une étape de former pour former une feuille plate;
une étape d'imprimer pour imprimer des dessins sur la feuille plate;
une étape de chauffer pour chauffer la feuille plate avec les dessins imprimés au-dessus;
une étape d'aspirer pour aspirer la feuille plate en état chauffé de sorte que la feuille plate est mise en contact avec une moule à vide étant gaufrée en forme d'une pluralité d'ongles artificiels, en aspirant de l'air à travers des tubes à vide installés à une partie de la face supérieure de la moule à vide sauf la zone gaufrée en forme d'une pluralité d'ongles artificiels ;
une étape de réfrigérer pour réfrigérer la feuille plate aspirée; et
une étape de couper pour couper la feuille plate réfrigérée en des ongles artificiels séparés.

2. Procédé selon la revendication 1, dans lequel l' étape de couper est effectuée au moyen de découpage.

3. Procédé selon la revendication 1, dans lequel la feuille plate est formée de résine PET.
